# EUROPÄISCHE PATENTANMELDUNG

(11) **EP 1 110 787 A2**
(43) Veröffentlichungstag der Anmeldung: **27.06.2001**
(21) Anmeldenummer: 00127049.5
(22) Anmeldetag: 11.12.2000
(51) Int. Cl.: B60K 7/00

(54) **Radantriebsvorrichtung und Achseinheit für den Einsatz in Radantrieben**

(30) Priorität: 20.12.1999 DE 19961053
(71) Anmelder: Voith Turbo GmbH & Co. KG, 89522 Heidenheim (DE)
(72) Erfinder: Angerer, Wolfram, 89518 Heidenheim (DE); Mühlberger, Uwe, 89522 Heidenheim (DE)
(74) Vertreter: Dr. Weitzel & Partner

(57) **Zusammenfassung**

Die Erfindung betrifft eine Radantriebsvorrichtung (1), insbesondere Einzelradantrieb für ein Rad eines Fahrzeuges, umfassend wenigstens eine sich wenigstens mittelbar auf einem Achskörper (12) einer Achseinheit (18) abstützende Radnabe (8) und eine zur Stützung eines Reifens vorgesehene Radfelge (6);
- mit einer elektrischen Antriebsmaschine (2), umfassend wenigstens einen, mit der Radnabe wenigstens mittelbar in Triebverbindung stehenden Rotor (3) und einen Stator (4);
- die elektrische Antriebsmaschine ist wenigstens teilweise innerhalb eines Bereiches, welcher durch die axiale Erstreckung der Radfelge beschrieben wird, angeordnet;
- der Achskörper umschließt die elektrische Antriebsmaschine in Umfangsrichtung über wenigstens einen Teil von deren axialer Erstreckung und erstreckt sich über die axiale Erstreckung der Radfelge in Einbaulage betrachtet in Richtung zur Fahrzeugmittenachse (F_{M}) hin.

Die Erfindung ist gekennzeichnet durch die folgenden Merkmale:
- mit Mitteln zur Kopplung der elektrischen Antriebsmaschine mit einer Energiequelle und/oder einer Steuer- und /oder Funktionseinrichtung;
- die Mittel sind im Achskörper (12) integriert.

## Beschreibung

Die Erfindung betrifft eine Radantriebsvorrichtung, insbesondere einen Einzelradantrieb für ein Rad eines Fahrzeuges, im einzelnen mit den Merkmalen aus dem Oberbegriff des Anspruchs 1; ferner eine Achseinheit für den Einsatz zur Kopplung zweier mittels Einzelradanrieb betriebener Räder.

Radantriebsvorrichtungen, insbesondere Einzelradantriebe, sind aus einer Vielzahl von Druckschriften bekannt. Stellvertretend wird dabei auf die Druckschriften
1. DE 195 27 951 A1 und
2. DE 197 43 906 A1
verwiesen. Die Druckschrift DE 195 27 951 A1 offenbart einen Antrieb über die Radnabe mittels einer Antriebsmaschine in Form eines Elektromotors, insbesondere einer Transversalflußmaschine, welche achsversetzt zur Radnabenachse im wesentlichen in einem Bereich außerhalb der Felge angeordnet ist und deren Abtriebswelle mittels eines Ritzels mit einem innenverzahnten Hohlrad kämmt. Das Ritzel ist zu diesem Zweck drehfest mit der Abtriebswelle der Antriebsmaschine koppelbar, während das Hohlrad wenigstens mittelbar drehfest mit der Radachse bzw. der Radnabenachse verbindbar ist. Vorzugsweise sind dabei sowohl das Ritzel mit der Abtriebswelle und das Hohlrad mit der Rad- bzw. Radnabenachse drehfest verbunden. Die Drehmomentenübertragung von der Radachse zur Radnabe erfolgt über wenigstens eine Planetenradstufe. Diese Lösung ermöglicht den Einsatz von elektrischen Antriebsmaschinen mit hoher Leistungsdichte zum Radnabenantrieb, und damit der Übertragung hoher Drehmomente auf die Radnabe. Problematisch bei einer derartigen Lösung ist jedoch die Verwendung einer herkömmlichen Scheibenbremseinrichtung, da deren Betätigungselemente schwerer zugänglich sind und des weiteren diese auch die Anordnung und/oder Abmessungen der Transversalflußmaschine bzw. der Drehmomenten-/Drehzahlübertragenden Bauelemente bestimmt. Des weiteren sind zur Realisierung der Drehmomentenübertragung eine Vielzahl von Getriebeelementen vorzusehen, da wenigstens ein Vorgelege und eine Drehzahl-Drehmomentwandlungseinrichtung erforderlich sind.

Eine Ausführung eines gattungsgemäßen Einzelradantriebes ist aus der Druckschrift DE 197 43 906 A1 bekannt. Diese offenbart eine Radantriebsvorrichtung mit einer elektrischen Antriebsmaschine, umfassend wenigstens einen Rotor und einen Stator. Der Rotor steht dabei mit der Radnabe wenigstens mittelbar in Triebverbindung. Die elektrische Antriebsmaschine ist wenigstens teilweise innerhalb eines Bereiches, welcher durch die axiale Erstreckung der Radfelge beschrieben wird, angeordnet. Die Radnabe stützt sich dabei über eine Radlagerung, umfassend eine innere Lagereinheit und eine äußere Lagereinheit wenigstens mittelbar auf der Radachse ab. Der Rotor ist in axialer Richtung betrachtet zwischen der inneren Lagereinheit und der äußeren Lagereinheit zur Abstützung der Radnabe auf der Radachse angeordnet. Der elektrischen Antriebsmaschine ist in Leistungsübertragungsrichtung eine Drehmoment-/Drehmomentwandlungseinrichtung nachgeschaltet, welche wenigstens mittelbar mit der Radnabe koppelbar ist. Bei dieser Anordnung des Rotors und die Übernahme der Funktion der Radachse durch das statortragende Element, besteht die Möglichkeit bei Verwendung eines Super-Single-Reifen, die Antriebsmaschine vollständig im Rad zu integrieren.

Zur Kupplung der elektrischen Antriebsmaschine mit einer Einrichtung zur Energiebereitstellung bzw. einer Steuereinheit oder einer Funktionseinheit sind elektrische Anschlußeinrichtungen erforderlich. Dabei steht bei Ausführungen gemäß der unter 1. genannten Druckschrift aufgrund der Nichtanordnung in der Felge der elektrischen Antriebsmaschine der erforderliche Raum zur Verfügung, um die Leistungs- und Signalkabel bzw. deren Zusammenfassung im Klemmenkasten direkt an das Gehäuse der elektrischen Antriebsmaschine anzubauen. Lange Führungsstrecken für die Leistungs- und/oder Signalkabel konnten damit entfallen.

Der Erfindung liegt die Aufgabe zugrunde, eine gattungsgemäße Radantriebsvorrichtung der eingangs genannten Art derart weiterzuentwickeln, dass auch bei diesen die Mittel zur Kopplung mit einer Energiequelle und/oder einer Steuer- und/oder Funktionseinrichtung in bauraumoptimierter Weise ohne extreme Richtungsänderungen der Führungen der Leistungs-und/oder Signalkabel der elektrischen Antriebsmaschine zuordenbar sind. Dabei soll nach wie vor eine leichte Zugängigkeit der einzelnen Mittel zur Verbindung mit einer Energiequelle und/oder einer Steuer- und/oder Funktionseinrichtung, insbesondere des Klemmenkastens, gewährleistet sein. Des weiteren soll die erfindungsgemäße Lösung sich durch Eignung für den Einsatz in einem Antrieb für ein Niederflurfahrzeug auszeichnen.

Die erfindungsgemäße Lösung ist durch die Merkmale der Ansprüche 1, 26 charakterisiert. Vorteilhafte Ausgestaltungen sind in den Unteransprüchen wiedergegeben.

Eine Radantriebsvorrichtung, insbesondere ein Einzelradantrieb für ein Rad eines Fahrzeuges, umfassend wenigstens eines sich wenigstens mittelbar auf einem Achskörper einer Achseinheit abstützende Radnabe und eine zur Stützung eines Rades vorgesehene Radfelge umfasst wenigstens eine elektrische Antriebsmaschine mit wenigstens einem, mit der Radnabe wenigstens mittelbar in Triebverbindung stehenden Rotor und einem Stator. Die elektrische Antriebsmaschine ist dabei wenigstens teilweise innerhalb eines Bereiches, welcher durch die axiale Erstreckung der Radfelge beschrieben wird, angeordnet. Der Achskörper umschließt in diesem Bereich die elektrische Antriebsmaschine in Umfangsrichtung über wenigstens einen Teil von deren axialer Erstreckung. Erfindungsgemäß sind Mittel zur Kopplung der elektrischen Antriebsmaschine mit einer Energiequelle und/oder einer Steuer- und/oder Funktionseinrichtung im Achskörper außerhalb des Bereiches, welcher durch die axiale Erstreckung der Radfelge charakterisiert ist, angeordnet, wobei dieser wenigstens ein Anschlußelement zur elektrischen Kopplung mit Verbindungsleitungen umfasst, welches über wenigstens eine elektrische Verbindungsleitung mit der elektrischen Antriebsmaschine gekoppelt ist.

Vorzugsweise sind eine Mehrzahl von Anschlußelementen vorgesehen, die in einem Klemmenkasten zu einer baulichen Einheit zusammengefasst sind. Der Klemmenkasten ist dabei erfindungsgemäß dem Achskörper angeordnet. Die Verbindungsleitungen, insbesondere die elektrischen Verbindungsleitungen zur Leistungsübertragung und die Signalleitungen, erstrecken sich dann vom Klemmenkasten bis zur elektrischen Antriebsmaschine. Aufgrund der radnahen Anordnung des Klemmenkastens und der Integration im Achskörper werden diese Bauelemente in radialer Richtung betrachtet in einem geschlossenen Gehäuse geführt, so dass Verschmutzungen oder Störungen im Führungsverlauf der Leistungs- und/oder Signalleitungen vermieden werden können. Des weiteren ermöglicht die Anordnung im radnahen Bereich des Achskörpers das Vorsehen möglichst kurzer Leistungs- und/oder Signalleitungen, was zu einer Minimierung von Fehlerquellen beiträgt.

In einer bevorzugten Anwendung für ein Niederflurfahrzeug ergibt sich als wesentlicher Vorteil eine freie Zugängigkeit vom Mittelgang der Fahrgastzelle des Fahrzeuges durch eine verschließbare Öffnung im Radkasten. Zu diesem Zweck kann der Achskörper in axialer Richtung mit einem Verschlußelement versehen werden. Die Führung der Leistungs- und Signalkabel ohne Richtungsänderung und ohne Außenführung entlang der Achseinheit ermöglicht eine direkte Verlegung dieser zum Umrichter, d.h. den elektrischen Bauelementen zur Umwandlung des zur Verfügung stehenden Stromes von Gleich- in Wechselstrom.

Unter einem weiteren, besonders vorteilhaften Aspekt der Erfindung werden Mittel zur Führung des zum Betrieb der elektrischen Maschine erforderlichen Kühlmittels durch entsprechende Kühlmittelleitungen im Achskörper bzw. von Kühlmittelkanälen in der Wand des Achskörpers vorgesehen, so dass diese Lösung eine zentrale Führung der elektrischen und hydraulischen Verbindungsleitungen im Achskörper ermöglicht.

Bezüglich der Art der verwendeten elektrischen Leitungen, der hydraulischen Leitungen und deren Führung bzw. Anordnung am Achskörper bestehen eine Vielzahl von Möglichkeiten. Vorzugsweise sind die einzelnen Verbindungsleitungen - elektrische Verbindungsleitungen und hydraulische Verbindungsleitungen - konzentrisch bzw. parallel zur Rotationsachse des Rades und zueinander im wesentlichen parallel angeordnet. In diesem Fall besteht die Möglichkeit, eine hohe Vielzahl von elektrischen Leitungsverbindungen und/oder hydraulischen Leitungsverbindungen im Achskörper zu integrieren.

Die erfindungsgemäße Lösung findet des weiteren Anwendung bei Ausführungen mit vollständig im Bereich der axialen Erstreckung der Felge im Rad integrierten elektrischen Antriebsmaschinen oder den Ausführungen, bei welchen die elektrischen Antriebsmaschine wenigstens teilweise über die axiale Erstreckung der Felge hinausragt. Auch in diesem Fall ist eine entsprechende Achskörperausführung, welche die Mittel zur Verbindung mit einer Energiequelle und/oder einer Steuereinrichtung und/oder Funktionseinrichtung ermöglicht.

Unter einem weiteren Aspekt der Erfindung erlaubt die Integration von Klemmenkasten und Verbindungsleitungen im Achskörper die Gestaltung einer Achseinheit für den Einsatz in Niederflurfahrzeugen, wie in Anspruch 17 beschrieben. Dabei wird der Bauraum für den Achskörper in axialer Richtung in Einbaulage betrachtet durch die Radfelge und die Seitenwände der Fahrgastzelle begrenzt. In vertikaler Richtung in Einbaulage ist die Erstreckung des Achskörpers in Richtung der Erdoberfläche an die theoretische Verlängerung der Bodenplatte in horizontaler Richtung gebunden. An den Achskörper schließt sich dabei unterhalb dieser Höhe wenigstens ein mechanisches Längsträgerverbindungselement an, welches jeweils in den Endbereichen die Achskörper der einander gegenüberliegenden Räder trägt. Dabei stützen sich auf einer Achseinheit zwei einander gegenüberliegende Radanordnungen ab, deren Rotationsachsen in einer gemeinsamen Ebene liegen.

Die Ausführung einer Achseinheit mit den jeweils den einander gegenüberliegenden Rädern zugeordneten Achskörpern, in welche die elektrische Antriebsmaschine und die Verbindungsmittel zu einer Energiequelle bzw. einer Steuer- und/oder Funktionseinrichtung integriert sind, bietet die Möglichkeit, der Gestaltung und Fertigung einer vormontierten Baueinheit in Form einer sogenannten elektrischen Achse, welche komplett vormontiert in dieser Form angeboten und gehandelt werden kann.

Bezüglich der detaillierten Ausgestaltung der elektrischen Antriebsmaschine der Radantriebsvorrichtung und weitere Modifikationen der Radantriebsvorrichtung bestehen eine Vielzahl von Möglichkeiten. Denkbar ist es, dem Rad eine Bremseinrichtung zuzuordnen, welche vorzugsweise als Scheibenbremseinrichtung ausgeführt ist. Die Bremsscheibe ist dabei mit der Radnabe verbunden, während der Bremssattel in axialer Richtung in unmittelbar räumlicher Nähe zum Rad angeordnet ist. Da die Anordnung der Bremsscheibe ebenfalls außerhalb der axialen Erstreckung der Radfelge erfolgt, umschließt diese vorzugsweise den Achskörper in diesem Bereich. Die Anordnung der Betätigungselemente für die Bremseinrichtung in Einbaulage des Radantriebes betrachtet erfolgt in diesem Fall oberhalb des Bremssattels, wobei der mit dem Bremssattel gekoppelte Betätigungshebel in Richtung zum Rad ausgerichtet ist, d.h. von der Fahrzeugmittenachse weggerichtet ist.

Die Funktion des Achskörpers wird dabei vorzugsweise vom statortragenden Bauelement, d.h. dem Bauelement, an welchem die Statorelemente der elektrischen Antriebsmaschine angeordnet und befestigt sind, übernommen. Diese Lösung bietet den Vorteil, einen Einzelradantrieb mit integrierter elektrischer Maschine im anzutreibenden Rad in einem Einzelreifen größerer Breite, d.h. in sogenannten Super-Single-Reifen unter Ausbildung des statortragenden Bauelementes als Achskörper zu integrieren und die dem Rad zugeordnete Bremseinrichtung in Form einer Scheibenbremse, wobei die Scheibe mit der Radnabe verbunden ist und außerhalb der axialen Erstreckung des Reifens angeordnet ist, mit minimalem Bauraumbedarf dem Rad zuzuordnen, um damit im Fahrzeug eine größere Gangbreite zwischen den einzelnen Radkästen zu schaffen, wobei diese nicht durch zusätzliche Einbauten wieder zunichte gemacht wird.

Im einfachsten Fall kann der Durchtrieb vom Rotor direkt auf die Radnabe, beispielsweise durch Realisierung einer drehfesten Verbindung zwischen beiden, erfolgen. Vorzugsweise ist jedoch in Kraftflußrichtung ein Drehzahl-/Drehmomentenwandler, vorzugsweise ein mechanischer Drehzahl-/Drehmomentenwandler, nachgeschaltet. Die Leistungsübertragung erfolgt dann vom Rotor der elektrischen Antriebsmaschine über die mechanische Drehzahl-/Drehmomentenwandler auf die Radnabe. Die Aufgabe des Drehzahl-/Drehmomentenwandlers besteht im wesentlichen in einer Übersetzung ins Langsame vom Rotor zur Radnabe. Vorzugsweise ist der mechanische Drehzahl-/Drehmomentenwandler derart ausgebildet, daß diese wenigstens einen Planetenradsatz umfaßt. Dabei bildet ein Getriebeelement des Planetenradsatzes den Eingang des mechanischen Drehzahl-/Drehmomentenwandlers und ein weiteres zweites Getriebeelement den Ausgang, welcher wenigstens mittelbar mit der Radnabe koppelbar ist. Vorzugsweise wird zur Erfüllung der Funktionen das erste Getriebeelement vom Sonnenrad des Planetenradsatzes gebildet, welches beispielsweise über eine Hohlwelle mit dem Rotor der elektrischen Antriebsmaschine in Triebverbindung steht. Den Abtrieb des Planetenradsatzes bildet vorzugsweise der Steg, welcher drehfest mit einer Antriebswelle, welche gleichzeitig die Verbindungswelle zur Radnabe ist, koppelbar ist. Denkbar ist theoretisch auch die Verwendung von Stirnradsätzen, bevorzugt werden jedoch Planetenradsätze.

Das statortragende Bauelement bildet im Einbauzustand mit dem Stator eine bauliche Einheit. Vorzugsweise sind das statortragende Bauelement und die einzelnen Statorelemente als einzelne Bauelemente ausgeführt, welche miteinander lösbar verbindbar sind. Der in radialer Richtung betrachtete Außenumfang des statortragenden Bauelementes bildet wenigstens eine Anlagefläche für die innere bzw. die äußere Lageranordnung, über welche sich das Rad auf dem als Radachse fungierenden statortragenden Bauelement abstützt. Vorzugsweise ist zur Schaffung einer möglichst kompakten abgeschlossenen Baueinheit das statortragende Element derart ausgebildet, daß dieses die elektrische Antriebsmaschine und den mechanischen Drehzahl-/Drehmomentenwandler in Umfangsrichtung im wesentlichen umschließt, d.h. sozusagen ein Gehäuse bildet. Aus rein konstruktiven Gründen ist das statortragende Bauelement vorzugsweise mehrteilig ausgeführt und umfaßt wenigstens zwei Bauelemente, welche miteinander in oben beschriebener Weise lösbar verbindbar sind. In Analogie gilt dies auch für die Radnabe, welche ebenfalls wenigstens zwei Bauelemente umfaßt, wobei beide Bauelemente lösbar mit dem Radkörper, welcher vorzugsweise als Radscheibe ausgeführt wird, verbindbar sind. Die Radnabe ist dabei derart ausgebildet, daß diese ebenfalls vorzugsweise im wesentlichen über den gesamten Umfangsbereich die Radachse bzw. die elekrische Antriebsmaschine und den mechanische Drehzahl-/Drehmomentenwandler umschließt.

Die elektrische Antriebsmaschine ist vorzugsweise als Transversalflußmaschine, ausgebildet und, kann vielgestaltig ausgeführt sein.

Die Transversalflußmaschine kann dabei entsprechend den Ausführungen, beschrieben in den folgenden Druckschriften:
3. DE 35 36 538 A1
4. DE 37 05 089 C1
5. DE 39 04 516 C1
6. DE 41 25 779 C1
ausgebildet werden. Der Offenbarungsgehalt bezüglich der Ausgestaltung und Arbeitsweise von elektrischen Maschinen, insbesondere Wechselstrommaschinen entsprechend den genannten Druckschriften 3 bis 6, wird hiermit voll umfänglich in den Offenbarungsgehalt der vorliegenden Anmeldung mit einbezogen. Die in diesen Druckschriften beschriebenen elektrischen Antriebsmaschinen umfassen wenigstens einen Stator mit wenigstens einer Ankerwicklung und einen der Ankerwicklung gegenüberliegenden Rotor. Der Rotor besteht dabei aus wenigstens zwei nebeneinander angeordneten, durch eine Zwischenlage aus magnetisch und elektrisch nicht leitendendem Material getrennten Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur. Bei einer symmetrisch gestalteten Transversalflußmaschine ist jeweils eine Polstruktur zu beiden Seiten an einer zentralen Trägerscheibe angeordnet. Vorzugsweise ist der Stator derart ausgebildet, daß dieser einen Außen- und einen Innenstator umfaßt, d.h. daß der Rotor in radialer Richtung betrachtet zwischen dem Außenstator und dem Innenstator rotiert. Denkbar ist jedoch auch der Einsatz von Ausführungen mit nur einem Innenstator oder einem Außenstator.

Die erfindungsgemäße Lösung ist nachfolgend anhand von Figuren erläutert. Darin ist im einzelnen folgendes dargestellt:
- Fig. 1: verdeutlicht anhand eines Ausschnittes aus einem Axialschnitt durch eine Radantriebsvorrichtung den Grundaufbau einer erfindungsgemäß gestalteten Achseinheit;
- Fig. 2: verdeutlicht eine Ansicht I-I gemäß Figur 1 auf einen Achskörper der Achseinheit.

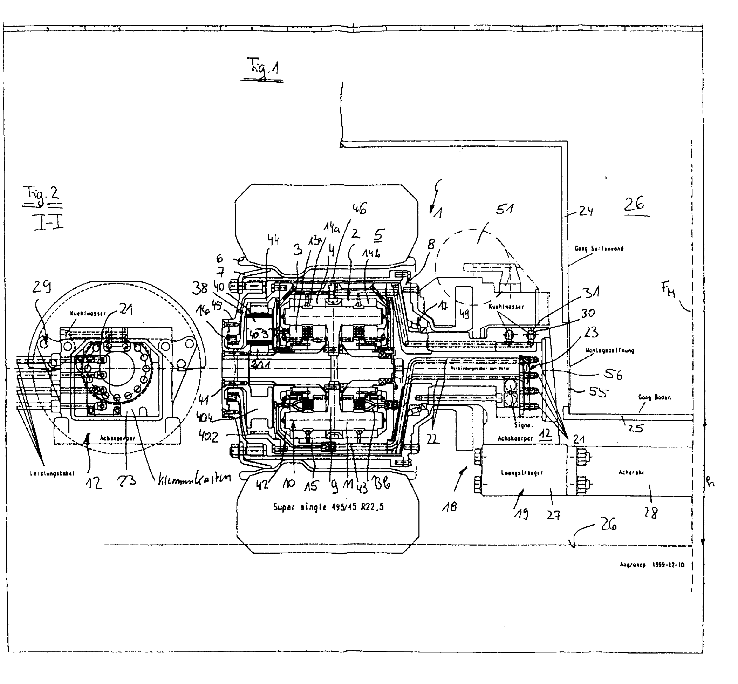

Die Figur 1 verdeutlicht anhand eines Axialschnittes durch eine erfindungsgemäß gestaltete Radantriebsvorrichtung ein einen Ausschnitt aus einer erfindungsgemäß gestalteten Achseinheit 18. Die Radantriebsvorrichtung 1, welche insbesondere als Einzelradantrieb ausgeführt ist, umfasst eine elektrische Antriebsmaschine 2 mit wenigstens einem Rotor 3 und einem Stator 4. Die elektrische Antriebsmaschine 2 ist dabei vorzugsweise als Transversalflußmaschine ausgeführt. Zur Realisierung des Einzelradantriebes ist die elektrische Antriebsmaschine 2 einem Rad 5 zugeordnet. Dieses weist eine Felge 6 und einen Radkörper 7 sowie eine Radnabe 8 auf. Die Felge 6 ist dabei über den Radkörper 7 mit der Radnabe 8 verbunden. Bei dem in der Figur 1 dargestellten Reifen 5 handelt es sich um einen Reifen mit größerer Breite, im einzelnen einen sogenannten Super-Single-Reifen zum Einsatz gelangen kann. Die elektrische Antriebsmaschine 2 ist dabei fast vollständig in axialer Richtung im Rad 5 integriert. Die Integration der elektrischen Antriebsmaschine 2 erfolgt dabei im Achskörper 12 der Achseinheit 18, welcher über wenigstens ein Querträgerverbindungselement 28 mit einem weiteren, hier im einzelnen nicht dargestellten Achskörper eines Rades wenigstens mittelbar verbunden ist, wobei die Rotationsachsen der beiden Räder im wesentlichen in einer gemeinsamen Ebene liegen. Die Kopplung zwischen den einzelnen Achskörpern, hier dem Achskörper 12 und dem Querträgerverbindungselement 28, kann dabei vielgestaltig ausgeführt sein. Denkbar sind form-, kraftschlüssige oder stoffschlüssige Verbindungen. Erfindungsgemäß sind Mittel 20 zur Kopplung der elektrischen Antriebsmaschine 2 mit einer Energiequelle und/oder einer Steuer- und/oder Funktionseinheit. Die Mittel 20 umfassen wenigstens ein Anschlußelement und Verbindungsleitungen 22 zwischen den jeweiligen Anschlußelementen 21 und der elektrischen Antriebsmaschine 2. Vorzugsweise sind bei Vorhandensein einer Mehrzahl von Anschlußelementen 21 diese in einem sogenannten Klemmkasten 23 zusammengefasst. Erfindungsgemäß sind dabei der Klemmkasten 23 und die davon ausgehenden Verbindungsleitungen 22 im Achskörper 12 integriert. Dieser umschließt die Mittel 20 bzw. den Klemmkasten 23 und die Verbindungsleitungen 22 in Umfangsrichtung, in Einbaulage betrachtet. Die Integration der elektrischen Antriebsmaschine 2 im Achskörper 12 erfolgt dabei derart, dass die elektrische Antriebsmaschine 2 vorzugsweise vollständig in einem Bereich in axialer Richtung, in Einbaulage betrachtet, angeordnet ist, welcher durch die axiale Erstreckung der Radfelge 6 begrenzt wird. Daran anschließend zur Fahrzeugmittenachse F_{M} hin betrachtet erfolgt die Integration der Mittel 20 zur Kopplung der elektrischen Antriebsmaschine 2 mit einer Energiequelle und/oder einer Steuer- und/oder Funktionseinheit. Der Achskörper erstreckt sich zu diesem Zweck im Einbauzustand über die axiale Erstreckung der Radfelge 6 hinaus in Richtung der Fahrzeugmittenachse F_{M}. In der Regel wird dabei der zur Verfügung stehende Bauraum für diesen Bereich des Achskörpers 12, welcher sich über die axiale Erstreckung der Radfelge 6 hinaus erstreckt, beim Einsatz in Fahrzeugen, insbesondere bei Niederflurbussen, durch die Seitenwände 24 und den Boden 25 einer Fahrgastzelle 26 begrenzt. Die axiale Erstreckung wird dabei durch die Seitenwände 24 und die Erstreckung im Einbauzustand in einem Radantrieb durch die Höhe h des Bodens 25 über der Erdoberfläche 26 bestimmt. Die Erstreckung in vertikaler Richtung des Achskörpers 12 in Richtung zur Erdoberfläche 26 erfolgt dabei wenigstens bis zur Höhe h, d.h. der Höhe des Bodens. Die mit dem Achskörper 12 verbundenen Längsträgerverbindungselemente 19, welche im dargestellten Fall einen Längsträger 27, ein mit diesem gekoppeltes Achsrohr 28 und einen, hier nicht dargestellten Längsträger zur Kopplung mit dem Achskörper des gegenüberliegenden Rades umfassen, erfolgt unterhalb der Höhe h, d.h. die höchste Erhebung des Längsträgerverbindungselementes 19 weist eine geringere Höhe als die Höhe des Ganges 25 über der Erdoberfläche 26 auf.

Unter einem weiteren Aspekt der Erfindung sind neben den Verbindungsleitungen 22 und den Anschlusselementen 21 bzw. dem Klemmkasten 23 Mittel 29 zur Kühlung der elektrischen Antriebsmaschine und/oder einzelner weiterer in der Radfelge 6 integrierte Elemente vorgesehen und im Achskörper 12 integriert. Die Mittel 29 umfassen dazu wenigstens eine Verbindungsleitung 30, welche entweder als separate rohrförmige Elemente oder aber als Kühlmittelführungskanäle in die Wände des Achskörpers eingearbeitet sind, ausgeführt sind. Die Mittel 29 umfassen zu diesem Zweck Anschlußelemente 31 zur Kopplung mit entsprechenden Kühlmittelversorgungseinrichtungen. Die Art der elektrischen Verbindungsleitungen 23 sowie der Verbindungsleitungen 30 zur Führung von Kühlmittel sowie deren Anordnung und Führung innerhalb des Achskörpers 12 kann beliebig erfolgen. Im dargestellten Fall wird eine Führung, in Einbaulage betrachtet, in horizontaler Richtung gewählt.

Bei der in der Figur 1 dargestellten Ausführung der Achseinheit 18 ist die elektrische Antriebsmaschine 2 vollständig in axialer Richtung, in Einbaulage betrachtet, im Bereich der axialen Erstreckung der Radfelge 6 angeordnet. Es sind jedoch auch Ausführungen denkbar, bei welchen entweder ein erheblicher Teil der Verbindungsleitungen 22 sowie der Verbindungsleitungen 30 wenigstens teilweise in der Radfelge 6 integriert ist oder bei welchem die elektrische Antriebsmaschine 2 sich wenigstens teilweise über die axiale Erstreckung der Felge 6 in axialer Richtung zur Fahrzeugmittenachse F_{M} hin betrachtet erstreckt.

Die Figur 1 verdeutlicht eine besonders vorteilhafte Ausführungsmöglichkeit einer Radantriebsvorrichtung 1 mit einer Transversalflußmaschine als elektrische Antriebsmaschine 2. Der dem Rotor 3 zugeordnete Stator 4 umfasst dabei jeweils einen Innenstator 13 und einen Außenstator 14. Der Innenstator umfasst dabei im dargestellten Fall ebenfalls zwei Statorelemente, ein erstes Innenstatorelement 13a und ein zweites Innenstatorelement 13b, die jeweils den einzelnen Polstrukturen 10 bzw. 11, welche beidseitig einer zentralen Trägerscheibe 9 angeordnet sind, zugeordnet sind. In Analogie dazu ist auch der Außenstator 4 in zwei Außenstatorelemente 14a und 14b unterteilt, welche ebenfalls den einzelnen Polstrukturen 10 bzw. 11 zugeordnet sind. Zur Realisierung der Funktionsweise ist es erforderlich, dass der Stator 4 wenigstens einen Außenstator 14 umfasst. Die einzelnen Statorelemente, die Innenstatorelemente 13a, 13b und die Außenstatorelemente 14a und 14b umfassen dabei vorzugsweise eine Vielzahl von in Umfangsrichtung hintereinander in bestimmten Abständen zueinander angeordneten Schnittbandkernen. Vorzugsweise sind diese Schnittbandkerne aus hintereinander angeordneten Blechelementen ausgeführt.

Der Rotor 3 der elektrischen Maschine 2, insbesondere der Transversalflußmaschine, steht dabei wenigstens mittelbar mit der Radnabe 8 in Triebverbindung. Die Radnabe 8 wiederum ist mit dem Radkörper 7 drehfest verbunden und damit mit der Felge 6. Das den Stator 4 der elektrischen Antriebsmaschine 2 tragende Element, hier mit 15 bezeichnet, wird von der Radachse 12 gebildet. Die einzelnen Statorelemente, insbesondere die Außenstatorelemente 14a und 14b, können dabei mit dem statortragenden Element 15 eine bauliche Einheit dahingehend bilden, dass diese als ein Bauteil ausgeführt sind. Es ist jedoch auch denkbar, die bauliche Einheit durch Kopplung der einzelnen Statorelemente, insbesondere der Außenstatorelemente 14a bzw. 14b, mit dem statortragenden Element 15 zu realisieren.

Die Abstützung des Rades 5 über den Radkörper 7 und die Radnabe 8 erfolgt mittels entsprechender Lageranordnungen, hier einer ersten äußeren Lageranordnung 16 und einer zweiten inneren Lageranordnung 17. Über diese Lageranordnungen 16 bzw. 17 stützt sich die Radnabe 8 auf der Radachse 12 in Form des statortragenden Bauelementes 15 ab. Der Rotor 3 der elektrischen Antriebsmaschine 2 ist dabei in axialer Richtung zwischen der äußeren Lageranordnung 16 und der inneren Lageranordnung 17 angeordnet.

Bei Inbetriebnahme der elektrischen Antriebsmaschine 2, insbesondere der Transversalflußmaschine, wird die elektrische Leistung in mechanische umgewandelt und über den Rotor, welcher mit der Radnabe 8 in Triebverbindung steht und vorzugsweise drehfest mit dieser gekoppelt ist, auf das Rad 5 übertragen. Die erfindungsgemäße Lösung ermöglicht dabei neben einer kompakten Gestaltung der Radantriebsvorrichtung 1, insbesondere eines Einzelradantriebes, welcher nahezu vollständig in axialer Richtung betrachtet in einem Bereich angeordnet ist, welcher durch die axiale Erstreckung der Felge 6 des Rades 5 beschrieben wird.

Die konkrete konstruktive Ausgestaltung der elektrischen Antriebsmaschine 2, welche als Wechselstrommaschine, die nach dem Transversalfluß arbeitet, ausgeführt ist, kann verschiedenartig erfolgen. Denkbar sind beispielsweise Ausführungen, wie sie aus den Druckschriften
1. DE 35 36 538 A1
2. DE 37 05 089 C1
3. DE 39 04 516 C1
4. DE 41 25 779 C1
bekannt sind. Der Offenbarungsgehalt dieser Druckschriften wird hiermit voll umfänglich bezüglich der Gestaltung einer Transversalflußmaschine und deren Funktionsweise in den Offenbarungsgehalt dieser Anmeldung mit einbezogen. Vorzugsweise weist dazu die elektrische Antriebsmaschine 2, insbesondere bei Ausführung als Transversalflußmaschine, einen im wesentlichen symmetrischen Aufbau auf. Der Rotor 3 wird dabei bei der Transversalflußmaschine von der Trägerscheibe 9 und beidseitig sich von dieser in axialer Richtung erstreckenden Polstrukturen 10 und 11 gebildet. Jede Polstruktur 10 bzw. 11 besteht dabei aus wenigstens zwei nebeneinander angeordneten, durch eine Zwischenlage aus magnetisch und elektrisch nicht leitendem Material 32 bzw. 33, getrennten Ringelementen 34 bzw. 35 für die Polstruktur 10 und 36 bzw. 37 für die Polstruktur 11. Die Ringelemente weisen dazu in Umfangsrichtung eine Vielzahl von wechselweise angeordneten, polarisierten Magneten und Weicheisenelementen auf. Denkbar ist jedoch auch eine Ausführung mit nur einer an einer zentralen Trägerscheibe 9 angeordneten Polstruktur 10. Der dem Rotor 3 zugeordnete Stator 4 umfasst dann wenigstens einen Außenstator 14 oder einen Innenstator 13. Vorzugsweise sind jedoch generell auch noch ein weiterer Innenstator 13, welcher sich in radialer Richtung zu einem Durchmesser d erstreckt, welcher kleiner ist als der Durchmesser des Rotors 3 bzw. ein weiterer Außenstator 14, vorgesehen. Im dargestellten Fall sind sowohl ein Außenstator 14 und ein Innenstator 13 wiedergegeben. Dies entspricht ebenfalls einer bevorzugten Ausführung. Theoretisch ist es jedoch auch denkbar, dass lediglich nur ein Innen- oder ein Außenstator vorgesehen wird. Der Stator 4 ist dabei mit dem statortragenden Element derart verbunden, dass diese im Einbauzustand eine bauliche Einheit bilden. Das statortragende Bauelement 15 ist dazu wenigstens über einen Teilbereich der Statorfläche, insbesondere der Statoraußenfläche, mit diesem verbunden. Es besteht dabei jedoch auch die theoretisch hier nicht dargestellte Möglichkeit, den Stator 4 und das statortragende Element 15 aus einem Bauteil herzustellen. Das statortragende Element 15 bzw. der mit diesem gekoppelte Stator 4 übernimmt dabei die Funktion der Radachse 12, d.h. die Abstützung der Momente. Auf diesem stützt sich das Rad 5, die Felge 6 über den Radkörper 7, welcher im dargestellten Fall als Radscheibe ausgeführt ist, und die Radnabe 8 ab. Vorzugsweise ist zur Untersetzung bzw. Übersetzung ganz langsam der elektrischen Antriebsmaschine 2 einen Drehzahl-/Drehmomentenwandler in Leistungsübertragungsrichtung nachgeschaltet. Die Kopplung bzw. Realisierung der Triebverbindung zwischen dem Rotor 3 der elektrischen Antriebsmaschine 2 und der Radnabe 8 erfolgt über den mechanischen Drehzahl-/Drehmomentenwandler 38. Zu diesem Zweck ist der Rotor 3 der elektrischen Antriebsmaschine 2 drehfest mit einer Hohlwelle 39 gekoppelt, welche sich über ein Lager auf der Radnabe 8 abstützt und mit dem Eingang des mechanischen Drehzahl-/Drehmomentenwandlers 38 gekoppelt ist. Der mechanische Drehzahl-/Drehmomentenwandler 38 umfasst vorzugsweise wenigstens einen Planetenradsatz 40. Dieser weist wenigstens ein Sonnenrad 40.1, ein Hohlrad 40.2, Planetenräder 40.3 und einen Steg 40.4 auf. Das Sonnenrad 40.1 ist dazu vorzugsweise in die Hohlwelle 39 eingearbeitet. Es besteht jedoch auch die Möglichkeit, dieses als separates Bauteil drehfest mit der Hohlwelle 39 zu verbinden. Das Hohlrad 40.2 ist am statortragenden Bauteil 15 angeordnet. Vorzugsweise ist dieses in das statortragende Bauteil 15 bzw. bei Bestehen des statortragenden Bauteils 15 aus mehreren, miteinander kraft- und/oder formschlüssig verbundenen Bauelementen, in eines von diesen eingearbeitet. Den Ausgang bzw. den Abtrieb des mechanischen Drehzahl-/Drehmomentenwandlers 38 bildet der Steg 40.4. Dieser ist drehfest mit einer sogenannten Antriebswelle 41 verbunden. Diese bildet die Verbindungswelle zwischen dem Ausgang des mechanischen Drehzahl-/Drehmomentenwandlers 38, hier dem Steg 40.4, und der Radnabe 8. Diese ist ebenfalls drehfest mit der Antriebswelle 41 gekoppelt. Die Kopplung kann unterschiedlich ausgeführt sein.

Die Abstützung des Rotors 3 der elektrischen Antriebsmaschine 2, des mechanischen Drehzahl-/Drehmomentenwandlers 38 und der Radnabe 8 erfolgt auf dem statortragenden Bauelement 15 über die äußere Lageranordnung 16. Diese ist vorzugsweise als Schrägrollenlager ausgeführt. Die Abstützung des Rades 5 erfolgt des weiteren über die innere Lageranordnung 17 auf dem statortragenden Bauelement 15 bzw. einem mit diesem gekoppelten Bauteil. Die Anordnung der elektrischen Antriebsmaschine 2 sowie des mechanischen Drehzahl-/Drehmomentenwandlers 38 erfolgt zwischen der Radlagerung, d.h. der Lager, über welches sich das Rad 5 auf der Radachse, d.h. dem Achskörper 12 der Achseinheit 18, als welches hier das statortragende Bauelement 15 fungiert, erfolgt. Im dargestellten Fall ist das statortragende Bauelement 15 aus mehreren Bauelementen, einem ersten Bauelement 42, einem zweiten Bauelement 43 und einem dritten Bauelement 44 zusammengefügt. Das erste Bauelement 42 trägt dabei im dargestellten Fall wenigstens jeweils einen Außenstator 14a und einen Innenstator 13a. Das zweite Bauelement 43 bildet die Lagerung bzw. die Verbindung zwischen dem Außenstator 14b und dem Innenstator 13b mit dem statortragenden Element 15. Beide Bauelemente sind vorzugsweise derart ausgeführt, dass diese die elektrische Antriebsmaschine 2 in radialer Richtung im wesentlichen glockenförmig umschlingen. Das dritte Bauelement 44 trägt das Hohlrad 40.2 des mechanischen Drehzahl-/Drehmomentenwandlers 38. Aus Montagegründen sind die einzelnen Bauelemente lösbar miteinander verbunden, vorzugsweise mittels Schraubverbindungen, welche in Umfangsrichtung auf einem bestimmten Durchmesser des statortragenden Bauelementes 15 in bestimmten Abständen zueinander angeordnet sind.

Die Radnabe 8 besteht vorzugsweise ebenfalls aus einer Mehrzahl von einzelnen Elementen, im einzelnen einem ersten Bauelement 45, einem zweiten Bauelement 46 sowie einem dritten Bauelement 47. Das erste Bauelement 45 der Radnabe 8 bildet damit den drehfest mit der Antriebswelle 41 gekoppelten Teil der Radnabe 8 sowie eine Lagerfläche zur Abstützung bzw. Fixierung der Lageranordnung 16 zur Abstützung der Radnabe 8 auf der Achseinheit 18, insbesondere dem Achskörper 12. Das zweite Bauelement 46 der Radnabe 8 ist mit dem ersten Bauelement 45 lösbar verbunden. Das dritte Bauelement 47 weist ebenfalls in radialer Richtung eine flanschartige Verdickung auf, welche ebenfalls wenigstens mittelbar an der Radscheibe bzw. dem Radkörper 7 zum Anliegen kommt. Die Radnabe 8, welche im dargestellten Fall aus den drei genannten Elementen 45 bis 47 besteht, ist form- bzw. kraftschlüssig über Schraubverbindungen 48 mit dem Radkörper 7 verbunden. Die Radnabe 8 bildet somit eine Art glockenförmiges Gehäuse, bestehend aus mehreren Bauteilen, welche in Umfangsrichtung den Achskörper 12 im wesentlichen innerhalb der Felge 6 umschließt. Das dritte Bauelement 47 der Radnabe 8 bildet dabei die Anschlagfläche für die Lager der zweiten inneren Lageranordnung 17, hier dem Außenring des Lagers 17.

Unter einem weiteren Aspekt ist mit der Radnabe 8 eine Bremsscheibe 49 einer Scheibenbremseinrichtung 50 verbunden. Diese umfaßt des weiteren entsprechende Betätigungselemente 51. Auch die Bremsscheibe 49 stützt sich damit über die innere Lageranordnung 17 auf dem statortragenden Element 15 ab.

Die Scheibenbremseinrichtung 50 umfasst des weiteren einen Bremssattel 52, welcher mit wenigstens einem scheibenförmigen Element, hier der Bremsscheibe 49, reibschlüssig in Wirkverbindung treten kann. Das scheibenförmige Element, insbesondere die Bremsscheibe 49, ist dazu mit der Radnabe 8 drehfest verbunden. Diese ist in axialer Richtung, in Einbaulage betrachtet, zwischen dem Rad 5 und den entsprechenden Begrenzungen durch die Wände 24 der Fahrgastzelle 26 angeordnet. Die Bremsscheibe 49 umschließt dabei in Umfangsrichtung den Achskörper 12 in axialer Richtung betrachtet über wenigstens einen Teilbereich der axialen Erstreckung des Achskörpers 12 über die axiale Erstreckung 6 der Felge hinaus.

Die Betätigungselemente 51 der Scheibenbremseinrichtung 50 ist vorzugsweise als Zylinder-Kolbeneinheit, vorzugsweise in Form eines sogenannten Tristop-Zylinders, dessen Kolben 53 an einem Betätigungshebel 54 am Bremssattel 52 wirksam wird. Der Betätigungshebel 54 dient dabei zur Übertragung der Anpresskraft im Bremssattel 52 auf die Bremsscheibe 49. Der Betätigungshebel 54 ist dabei in Richtung zum Rad 5 ausgerichtet. Das Betätigungselement 51 in Form des Tristop-Zylinders ist oberhalb des Bremssattels 52 angeordnet.

Die Figur 2 verdeutlicht eine Ansicht I-I gemäß Figur 1. Daraus wird ersichtlich, dass die Mittel 20 zur Kopplung der elektrischen Antriebsmaschine 2 mit einer Energiequelle und/oder einer Steuer- und/oder Funktionseinheit im Achskörper 12 vollständig integrierbar sind. Dies gilt auch für die Mittel 29 zur Kühlung der elektrischen Antriebsmaschine. Dargestellt sind dazu noch einmal der Klemmkasten 23 sowie die Anschlusselemente 21, welche im Klemmkasten zusammengefügt sind und die entsprechenden Verbindungsleitungen 22, welche die Anschlusselemente 21 mit der elektrischen Antriebsmaschine verbinden.

Die erfindungsgemäße Lösung bietet den Vorteil, dass zum einen die Verbindungsleitungen, im einzelnen vor allem die elektrischen Verbindungsleitungen 22, bis zu den Anschlusselementen 21 in einer geschlossenen Achskonstruktion, d. h. im Achskörper verbleiben, wobei eine freie Zugängigkeit vom Mittelgang der Fahrgastzelle 26 beim Einsatz in Bussen möglich ist, diese wird beispielsweise über die Montageöffnung 55 in der Seitenwand 24 realisiert. Der Achskörper ist dazu in axialer Richtung offen oder aber mit einem Verschlusselement frei verschließbar ausgeführt. Das Verschlußelement ist im dargestellten Fall mit 56 bezeichnet.

Ein weiterer wesentlicher Vorteil besteht darin, dass die zur Leistungsübertragung erforderlichen Verbindungsleitungen bzw. zur Ansteuerung der elektrischen Antriebsmaschine 2 erforderlichen Signalkabel ohne Richtungsänderung und ohne dass diese über die Achse geführt werden müssen, direkt zur Umrichtereinheit verlegt werden können.

Die in den Figuren 1 und 2 beschriebene Radantriebsvorrichtung stellt eine besonders kompakte und damit vorteilhafte Ausführungsmöglichkeit dar. Die erfindungsgemäße Lösung bezüglich der Integration der Mittel zur elektrischen Kopplung zwischen der elektrischen Antriebsmaschine und einer Energiequelle sowie der Steuer- oder Funktionseinheit ist nicht auf die hier dargestellte Ausführung beschränkt. Weitere Ausführungen sind möglich und iegen im Ermessen des zuständigen Fachmannes.

### BEZUGSZEICHENLISTE

- 1: Radantriebsvorrichtung
- 2: Antriebsmaschine
- 3: Rotor
- 4: Stator
- 5: Rad
- 6: Felge
- 7: Radkörper
- 8: Radnabe
- 9: Zentrale Trägerscheibe
- 10: Polsruktur
- 11: Polstruktur
- 12: Achskörper
- 13: Innenstator
- 14: Außenstator
- 14a, 14b: Außenstatorelement
- 13a, 13b: Innenstatorelement
- 15: Statortragendes Element
- 16: Äußere Lageranordnung
- 17: Innere Lageranordnung
- 18: Achseinheit
- 19: Längsträgerverbindungselement
- 20: Mittel zur Kopplung der elektrischen Antriebsmaschine mit einer Energiequelle und/oder einer Steuereinheit und/oder einer Funktionseinheit
- 21: Anschlusselement
- 22: Verbindungsleitung
- 23: Klemmkasten
- 24: Seitenwand
- 25: Boden
- 26: Erdoberfläche
- 27: Längsträger
- 28: Achsrohr
- 29: Mittel zur Kühlung der elektrischen Antriebsmaschine
- 30: Verbindungsleitung
- 31: Anschlusselement
- 32: Zwischenlage aus magnetisch und elektrisch nicht leitendem Material
- 33: Zwischenlage aus magnetisch und elektrisch nicht leitfähigem Material
- 34: Ringelement
- 35: Ringelement
- 36: Ringelement
- 37: Ringelement
- 38: Mechanischer Drehzahl-/Drehmomentenwandler
- 39: Hohlwelle
- 40: Planetenradsatz
- 41: Antriebswelle
- 42: Erstes Bauelement
- 43: Zweites Bauelement
- 44: Drittes Bauelement
- 45: Erstes Bauelement
- 46: Zweites Bauelement
- 47: Drittes Bauelement
- 48: Schraubverbindung
- 49: Bremsscheibe
- 50: Scheibenbremseinrichtung
- 51: Betätigungselement
- 52: Bremssattel
- 53: Kolben
- 54: Betätigungshebel
- 55: Montageöffnung
- 56: Verschlusselement

## Patentansprüche

1. Radantriebsvorrichtung (1), insbesondere Einzelradantrieb für ein Rad (5) eines Fahrzeuges, umfassend wenigstens eine sich wenigstens mittelbar auf einem Achskörper (12) einer Achseinheit (18) abstützende Radnabe (8) und eine zur Stützung eines Reifens vorgesehene Radfelge (6);
1.1 mit einer elektrischen Antriebsmaschine (2), umfassend wenigstens einen, mit der Radnabe (8) wenigstens mittelbar in Triebverbindung stehenden Rotor (3) und einen Stator (4);
1.2 die elektrische Antriebsmaschine (2) ist wenigstens teilweise innerhalb eines Bereiches, welcher durch die axiale Erstreckung der Radfelge (6) beschrieben wird, angeordnet;
1.3 der Achskörper (12) umschließt die elektrische Antriebsmaschine (2) in Umfangsrichtung über wenigstens einen Teil von deren axialer Erstreckung und erstreckt sich über die axiale Erstreckung der Radfelge (6) in Einbaulage betrachtet in Richtung zur Fahrzeugmittenachse (F_{M}) hin;
gekennzeichnet durch die folgenden Merkmale:
1.4 mit Mitteln (20) zur Kopplung der elektrischen Antriebsmaschine (2) mit einer Energiequelle und/oder einer Steuer- und /oder Funktionseinrichtung;
1.5 die Mittel (20) sind im Achskörper (12) integriert.

2. Radantriebsvorrichtung (1) nach Anspruch 1, gekennzeichnet durch die folgenden Merkmale:
2.1 die Mittel (20) zur Kopplung der elektrischen Antriebsmaschine mit einer Energiequelle und/oder einer Steuer- und/oder Funktionseinrichtung umfassen wenigstens ein Anschlusselement (21) zur Realisierung der elektrischen Verbindung mit fahrzeugseitigen Leitungssträngen und wenigstens eine Verbindungsleitung (22) zur Kopplung des Anschlusselementes (21) mit der elektrischen Antriebsmaschine (2);
2.2 die Anschlusselemente (21) sind in einem Klemmenkasten zusammengefasst;
2.3 der Klemmenkasten (23) ist im Achskörper (12) integriert.

3. Radantriebsvorrichtung (1) nach Anspruch 2, dadurch gekennzeichnet, dass die elektrischen Verbindungsleitungen (22) parallel zueinander im Achskörper (12) geführt werden.

4. Radantriebsvorrichtung (1) nach einem der Ansprüche 1 bis 3, dadurch gekennzeichnet, dass die elektrische Antriebsmaschine (2) vollständig im Bereich der axialen Erstreckung der Felge (6) angeordnet ist.

5. Radantriebsvorrichtung (1) nach einem der Ansprüche 1 bis 4, dadurch gekennzeichnet, dass der Achskörper (12) von einem, den Stator (4) tragenden Bauelement (15) gebildet wird.

6. Radantriebsvorrichtung nach Anspruch 5, dadurch gekennzeichnet, daß der Stator (4) und das statortragende Element (15) als einteiliges Bauteil ausgeführt sind.

7. Radantriebsvorrichtung nach Anspruch 5, dadurch gekennzeichnet, daß das statortragende Element (15) wenigstens zwei Elemente (42, 43, 44) umfaßt, welche mittels einer kraft- und/oder formschlüssigen und/oder stoffschüssigen Verbindung im Einbauzustand eine bauliche Einheit bilden.

8. Radantriebsvorrichtung nach einem der Ansprüche 1 bis 7, dadurch gekennzeichnet, daß der Rotor (4) in axialer Richtung betrachtet zwischen einer inneren Lagereinheit (17) und einer äußeren Lagereinheit (16) zur Abstützung der Radnabe (8) auf dem Achskörper (12) angeordnet ist.

9. Radantriebsvorrichtung nach einem der Ansprüche 1 bis 8, dadurch gekennzeichnet, daß in Leistungsübertragungsrichtung der elektrischen Antriebsmaschine (2) ein mechanischer Drehzahl-/Drehmomentenwandler (38) nachgeschaltet ist, welche wenigstens mittelbar mit der Radnabe (8) koppelbar ist.

10. Radantriebsvorrichtung nach Anspruch 9, dadurch gekennzeichnet, daß der Drehzahl-/Drehmomentenwandler (38) wenigstens einen Planetenradsatz (40) umfaßt.

11. Radantriebsvorrichtung nach Anspruch 10, dadurch gekennzeichnet, daß die Kopplung zwischen dem Planetenradsatz (40) und der Radnabe (8) über eine mit der Radnabe (8) drehfest verbundene Antriebswelle (41), welche mit dem Ausgang des Planetenradsatzes (30) gekoppelt ist, realisiert wird.

12. Radantriebsvorrichtung (1) nach einem der Ansprüche 1 bis 11, dadurch gekennzeichnet, dass Mittel (29) zur Kühlung der elektrischen Antriebsmaschine (2) vorgesehen sind und diese im Achskörper (12) angeordnet sind.

13. Radantriebsvorrichtung (1) nach Anspruch 12, dadurch gekennzeichnet, dass die Mittel (29) zur Kühlung der elektrischen Antriebsmaschine (2) Kühlmittelkanäle (30) umfassen, welche in der Wand des Achskörpers eingearbeitet sind.

14. Radantriebsvorrichtung (1) nach einem der Ansprüche 1 bis 13, dadurch gekennzeichnet, dass der Achskörper (12) von einem, den Stator (4) tragenden Bauelement (15) gebildet wird.

15. Radantriebsvorrichtung nach Anspruch 14, gekennzeichnet durch die folgenden Merkmale:
15.1 der Rotor (3) umfaßt eine Trägerscheibe (9) und wenigstens eine sich in axialer Richtung von der Trägerscheibe weg erstreckende und an dieser angeordnete Polstruktur (10,11);
15.2 jede Polstruktur (10,11) umfaßt zwei nebeneinanderliegende, durch eine Zwischenlage (32, 33) aus magnetisch und elektrisch nicht leitendem Material (Zwischenring) getrennte Reihen (34, 35, 36, 37) aus in Umfangsrichtung wechselweise magnetisierten Magneten mit dazwischenliegenden Weicheisenelementen.

16. Radantriebsvorrichtung nach Anspruch 15, dadurch gekennzeichnet, daß die Trägerscheibe (9) zwei an beiden Seiten sich in axialer Richtung von der Trägerscheibe (9) weg erstreckende und an dieser angeordnete Polstrukturen (10,11) umfaßt.

17. Radantriebsvorrichtung nach einem der Ansprüche 14 bis 16, dadurch gekennzeichnet, daß der Stator (4) wenigstens einen Außenstator (14a, 14b) umfaßt, welcher in radialer Richtung betrachtet auf einem Durchmesser angeordnet ist, welcher größer als der Durchmesser des Außenumfanges des Rotors (3) ist.

18. Radantriebsvorrichtung nach einem der Ansprüche 14 bis 17, dadurch gekennzeichnet, daß der Stator (4) einen Innenstator (13b, 14b) umfaßt.

19. Radantriebsvorrichtung nach einem der Ansprüche 14 bis 18, dadurch gekennzeichnet, daß der Rotor (3) und/oder der Stator (4) oder das statortragende Element (15) in radialer Richtung wenigstens jeweils einen äußeren Zwischenraum bilden;
es sind Mitte zur Kopplung der Schmiermittelzufuhr zum mechanischen Drehzahl-/Drehmomentenwandler (38) mit den Zwischenräumen vorgesehen.

20. Radantriebsvorrichtung nach Anspruch 19, dadurch gekennzeichnet, daß die Mittel zur Kopplung und wenigstens mittelbaren Befüllung eines Teilbereiches der Zwischenräume zwischen Rotor (3) und Stator (4) oder Rotor (3) und statortragendem Element (15) wenigstens einen, im statortragenden Element (15) vorgesehenen und wenigstens indirekt mit der Schmiermittelversorgungseinrichtung koppelbaren Kanal umfassen.

21. Radantriebsvorrichtung (1) nach einem der Ansprüche 1 bis 20, gekennzeichnet durch die folgenden Merkmale:
21.1 mit einer dem Rad (5) zugeordneten Bremseinrichtung, umfassend eine Scheibenbremseinrichtung (50) mit einer Bremsscheibe (49), welche drehfest mit der Radnabe (8) verbunden ist und einem der Bremsscheibe (49) zugeordneten Bremssattel (52), und eine am Bremssattel (52) wirksam werdende Betätigungseinrichtung (51);
21.2 die Bremseinrichtung (50) ist in axialer Richtung in unmittelbar räumlicher Nähe zum Rad (5) angeordnet;
21.3 die Betätigungseinrichtung (51) ist oberhalb des Bremssattels (52) der Bremseinrichtung (50) angeordnet und erstreckt sich in axialer Richtung zur Fahrzeugmittenachse (F_{M}) betrachtet nicht über die Abmessungen der Bremseinrichtung (50) in dieser Richtung hinaus.

22. Radantriebsvorrichtung nach Anspruch 21, gekennzeichnet durch die folgenden Merkmale:
22.1 die Betätigungseinrichtung (51) umfasst wenigstens ein Betätigungselement, welches an einem am Bremssattel (52) angelenkten Betätigungshebel (54) wirksam wird;
22.2 der Betätigungshebel (54) ist parallel oder geneigt zu einer Parallelen zur Achse des Rades (5) ausgeführt und in Richtung zum Rad (5) gerichtet.

23. Radantriebsvorrichtung (1) nach Anspruch 22, dadurch gekenzeichnet, dass das Betätigungselement (51) eine Zylinder-Kolbeneinheit umfasst, wobei der Kolben am Betätigungshebel (54) angelenkt ist.

24. Radantriebsvorrichtung (1) nach Anspruch 23, dadurch gekennzeichnet, dass die Zylinder-Kolbeneinheit in vertikaler Richtung betrachtet geneigt angeordnet ist.

25. Radantriebsvorrichtung (1) nach Anspruch 23, dadurch gekennzeichnet, dass der Betätigungshebel (54) in vertikaler Richtung betrachtet geneigt ausgeführt ist.

26. Achseinheit für den Einsatz in Radantriebsvorrichtungen von Fahrzeugen;
26.1 mit jeweils einem, einem Rad zugeordneten Achskörper (12);
26.2 die Achskörper (12) sind über ein Querträgerverbindungselement (28) miteinander verbunden;
gekennzeichnet durch die folgenden Merkmale:
26.3 der Achskörper (12) umschließt in Umfangsrichtung eine elektrische Antriebsmaschine (2) wenigstens auf einem Teil von deren axialer Erstreckung;
26.4 der Achskörper (12) umschließt Mittel (20) zur Kopplung der elektrischen Antriebsmaschine (2) mit einer Energiequelle und/oder einer Steuer- und/oder Funktionseinheit.

27. Achseinheit (18) nach Anspruch 26, dadurch gekennzeichnet, dass diese als Baueinheit vormontierbar ist.

28. Verwendung einer Radantriebsvorrichtung gemäss einem der Ansprüche 1 bis 25 zum Antrieb eines Rades (5) eines Niederflurfahrzeuges.
